Europäisches Patentamt

European Patent Office

Office européen des brevets

(19)

(11) Publication number: **0 083 821**
**B1**

(12) **EUROPEAN PATENT SPECIFICATION**

(45) Date of publication of patent specification: **27.08.86**

(51) Int. Cl.⁴: **B 44 D 3/00, G 01 F 11/00**

(21) Application number: **82201667.1**

(22) Date of filing: **27.12.82**

(54) **Paint dispenser comprising a supply container and a dispensing head.**

(30) Priority: **28.12.81 NL 8105870**

(43) Date of publication of application:
**20.07.83 Bulletin 83/29**

(45) Publication of the grant of the patent:
**27.08.86 Bulletin 86/35**

(84) Designated Contracting States:
**DE FR GB SE**

(56) References cited:
**DE-B-2 839 204**
**US-A-4 101 055**

(73) Proprietor: **Gerritse, Jan**
**Patrijsstraat 99**
**NL-6971 VA Brummen (NL)**

(72) Inventor: **Gerritse, Jan**
**Patrijsstraat 99**
**NL-6971 VA Brummen (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

This invention relates to a paint dispenser comprising a supply container connected in a paint supply path and a paint delivery path including a dispensing head, said paint delivery path being controllable by means of a shutting-off device, and said dispensing head including a tubular part with an outlet opening and a pin member mounted in said tubular part for controlled movement in the longitudinal direction of the tubular part into and out of the paint delivery path.

A similar paint dispenser is disclosed in German Auslegeschrift 28 39 204, and is used, for example, in a colour mixing machine, in which the dispensing heads of a plurality of paint dispensers terminate over a central place, underneath which a container can be placed on a weighing device, so that a metered quantity of paint can be supplied to said container, under the control of the weighing device, from one or more supply containers. The pin member in the prior construction is mounted for longitudinal movement in a sleeve that is longitudinally movable within the tubular part, which tubular part comprises a flange for sealing contact with the end face of said sleeve facing the outlet opening, said flange having a central aperture of a diameter less than the inner diameter of said sleeve, which at a short distance above the flange is provided with laterally extending bores. In this arrangement the pin member is a cylindrical body which at the end facing the outlet opening is provided with a cylindrical stud of smaller diameter than the cylindrical body, the diameter of the cylindrical body being equal to the inner diameter of the sleeve, and that of the stud being equal to that of the central aperture. The sleeve is retractable together with the pin member to outside the paint delivery path, whereby the full passage of the outlet opening is cleared. This passage can be reduced by the end of the dispensing operation by lowering the sleeve until the flange thereof closes the passage, and only the smaller central flange aperture remains available as a passageway. The supply of paint is shut off by lowering the pin member until the stud thereof closes the central aperture. Although this paint dispenser permits proper metering, problems may be encountered with it as a result of the after-drip of paint from one or more dispensing heads used during a previous dispensing operation. Thus, in case a light colour is to be produced, the addition of one or more drops of dark paint will result in a considerable deviation from the colour desired. These undesirable droplets come from closed dispensing heads, in which, after closure, droplets continue to append from the stud of the pin member pushed out of the dispensing head.

It is an object of the present invention to provide a paint dispenser with which the production of a desirable paint formulation is improved in a simple, but effective manner by preventing the after-drip of paint; and this while retaining the possibility of metering paint in a reliable manner.

For this purpose, according to the invention, a paint dispenser defined in the opening paragraph of this specification is characterized in that said shutting-off device is a shut-off valve, and said pin member is movable between a position partially closing said paint delivery path in spaced relation to said outlet opening and the fully open position out of said paint delivery path, the arrangement being such that when said shut-off valve is in its closed position said pin member is moved into the paint delivery path, and then retracted.

Owing to these features, the after-drip of paint is prevented by closing the shut-off valve towards the end of the delivery of paint, and moving the pin member into the direction of the mouth of the outlet opening, whereby a portion of the paint present in the tubular part is expelled, and subsequently withdrawing the pin member to outside the paint delivery path, whereby any paint still present in the tubular part is sucked back, thereby eliminating the risk of after-drip.

In addition the pin member can be used to extra advantage as a fine-metering or adjusting means. For fine-metering, towards the end of the dispensing phase, the pin member is moved at least partially past the entrance of the paint delivery path in the dispensing head, owing to which the paint throughput is reduced. In this way, a predetermined quantity to be supplied is accurately controllable. By withdrawing the pin member, after-drip is again prevented as described above. If, after termination of the continuous dispensing stage the amount of paint supplied is — whether or not deliberately — just a little short of the amount desired, adjustment can be effected by reciprocating the pin member, as each reciprocation thereof will expel a drop of paint.

These advantages are achieved with a relatively simple construction without multiple telescoping parts which require close manufacturing tolerances. Both manufacture and cleaning can be greatly simplified if the tubular part of the dispensing head comprises a sleeve detachably secured in said head and forming part of said paint delivery path. In this construction, both fine-metering and after-adjustment can be influenced to advantage, if the paint delivery path connects to the tubular part of said delivery head at a point spaced above its outlet opening at the level of the upper end of said sleeve. Precision metering can then be accurately controlled as the supply of paint is restricted through cooperation of the pin member and the sleeve at the point where the paint enters the tubular part of the dispensing head, and after-adjustment by virtue of a certain supply of paint being present in the dispensing head.

According to a further preferred embodiment according to the invention, the paint can be kept in the correct condition which, together with preventing after-drip optimally ensures that the correct amount of paint of the correct composition is dispensed. In that preferred embodiment, the paint supply path includes a conduit which via a valve is connected to the paint delivery path, which further includes a pump interposed between said valve and said shut-off valve, and to which a return conduit is connected at a point intermediate said pump and said shut-off valve, the other end of which return conduit terminates in said supply container at a point remote from the outlet thereof, said return conduit including a restriction means. As a result of the provision of the return conduit and the pump, the paint in the supply container can be agitated at set intervals to prevent segregation and like adverse effects during prolonged storage in the supply container. In addition this arrangement makes it possible to build up a pressure in the conduit between the pump and the restriction means, and hence at the shut-off valve, which renders dispensing independent of the pump action and more accurate owing to a more constant supply of paint to the dispensing head. In addition the pump can be used to additional advantage as an intake means for replenishing the supply container, and renders it possible to connect a plurality of dispensing heads to a supply container, which heads may be disposed at relatively large distances from each other and at different levels. A further guarantee for keeping the paint in optimum condition is provided if, according to the invention, said delivery path includes a filter interposed between the point of connection of said return conduit and said valve. The advantage of placing the filter in the conduit which can conduct paint from the supply container to the dispensing head is that filtered paint is delivered by the latter, so that a mixture obtained from a plurality of heads does not need to be filtered, which amounts to a considerable advantage as regards maintaining a correct composition of the resulting mixture.

One embodiment of the invention will now be described, by way of example, with reference to the accompanying drawings, in which

Fig. 1 diagrammatically illustrates an arrangement of the paint dispenser according to the invention; and

Fig. 2 is a cross-sectional view showing a dispensing head according to the invention.

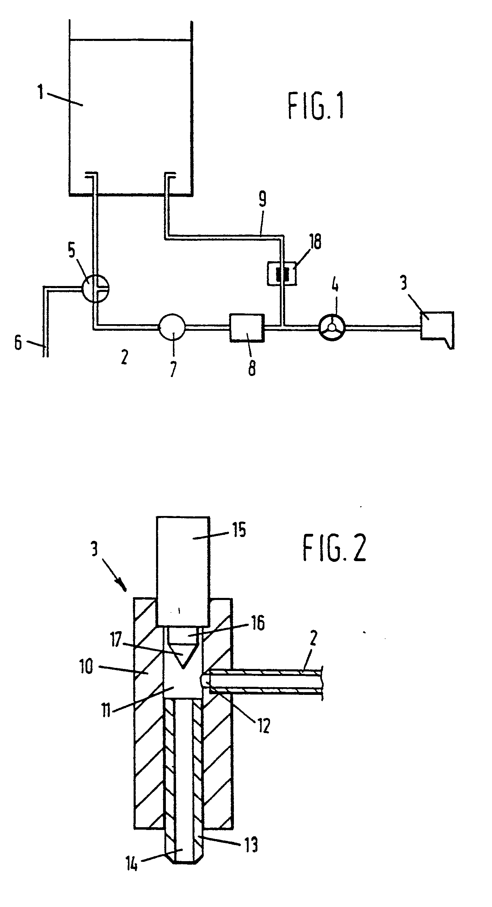

The paint dispenser illustrated in Fig. 1 comprises a supply container 1, to which is connected at the bottom a delivery conduit 2, which leads to a dispensing head 3. Included in delivery conduit 2, a short distance upstream of dispensing head 3, is a shut-off valve 4, with which the supply of paint to the dispensing head can be released or stopped.

Delivery conduit 2 further includes a three-way valve 5, to which a supply conduit 6 is connected. Disposed between valve 5 and shut-off valve 4 are, in succession, a pump 7 and a filter 8. Connected to delivery conduit 2 at a point intermediate valve 4 and filter 8, finally, is a return conduit 9, which at its other end terminates in supply container 1 at a point remote from the inlet of conduit 2 in container 1, and in which a restriction means 18 is included.

When paint from supply container 1 is to be delivered to dispensing head 3 pump 7 is switched on while valve 4 is in its closed condition, as a result of which — if not already present — a pressure is built up between pump 7 and restriction means 18. When this pressure is constant, valve 4 is opened, and paint is supplied to dispensing head 3 via filter 8 with a minimum of flow fluctuations.

By switching valve 5, it is also possible to draw in paint from a fresh supply via conduit 6 and using pump 7, and to deliver this to head 3. If, in this arrangement, valve 4 is closed, the paint drawn in is supplied via pump 7, filter 8 and return conduit 9 to supply container 1.

In order to avoid segregation and concomitant adverse effects, the paint should be agitated at set intervals. This can realized in a simple manner with the present arrangement by activating pump 7 while valve 4 is closed. The paint will then begin to circulate from container 1 through conduit 2 — via pump 7 and filter 8 — and conduit 9 back into the container, whereby the paint can be stirred as desired.

Fig. 2 illustrates the dispensing head 3 in greater detail. As shown, head 3 comprises a body 10 with a through-bore 11 and a cross-bore 12. Mounted in bore 11 at one end, for example, by means of a screw connection, is a sleeve 13 with a through-bore 14, and at the other end a piston-and-cylinder unit 15, for example, also by means of a screw connection. In the cross-bore 12, the end of delivery conduit 2 is secured, for example by welding. The piston-and-cylinder unit 15 comprises an outwardly projecting piston rod 16, which terminates in a tip 17. Unit 15 has such a piston, for example spring-loaded, that the piston rod 16 is always biased to the position in which it is withdrawn in unit 15, and whereby the passage from conduit 2 to sleeve 13 is fully cleared.

The operation of dispensing head 3 is as follows. When the supply of paint through conduit 2 is stopped by closing shut-off valve 4, a signal is issued, in response to which piston rod 16 pops out of unit 15. The result is that paint present in dispensing head 3 is forced outwards. After reaching its extreme protracted position, piston rod 16 will be forced back into its retracted position, as a result of which paint is "sucked" back from bore 15 of sleeve 13, and this in such a manner as to ensure that after-drip is prevented in an extremely reliable manner.

In addition to this basic function, piston rod 16 may have a fine-metering and/or adjusting function. The paint dispensed by head 3 during the dispensing operation falls into a mixing container, not shown, disposed under head 3 on a weighing device. As soon as the weighing device establishes that a pre-determined portion of the total amount of paint to be supplied has been reached, a signal can be issued, in response to which piston rod 16 is protracted to such an extent that its tip 17 extends into bore 14 of sleeve 13. In this way the amount of paint dispensed by head 3 per unit of time can be reduced so as to create a possibility of fine-metering. After valve 4 has been closed, after-drip can be prevented in the manner described above.

The moment valve 4 is closed can be selected so that the amount of paint in the mixing container comes to be just short of the amount required. An accurately metered supplement can then be dispensed until the required amount is completed by reciprocating piston rod 16 to expel a drop from head 3 with each stroke.

It is noted that many modifications and variants are possible without departing from the scope of the invention. Thus, for example, return conduit 9 may connect to delivery conduit 2 at the position of valve 4, which would mean complete separation between delivery to head 3 and circulation of the paint. Also, pump 7 and filter 8 could be interchanged, and return conduit 9 would terminate in supply container 1 at a higher level. Furthermore, piston rod 16, in particular its tip 17, may have any other shape that that shown and described and, in its retracted position, extend in full or in part into the paint delivery path. Another possibility is that sleeve 13 is omitted and bore 11 is given a suitable diameter.

### Claims

1. A paint dispenser comprising a supply container connected in a paint supply path and a paint delivery path including a dispensing head (3), said paint delivery path being controllable by means of a shutting-off device, and said dispensing head including a tubular part (10) with an outlet opening and a pin member (16) mounted in said tubular part for controlled movement in the longitudinal direction of the tubular part into and out of the paint delivery path, characterized in that said shutting-off device is a shut-off valve (4), and said pin member (16) is movable between a position partially closing said paint delivery path in spaced relation to said outlet opening and the fully open position out of said paint delivery path (2), the arrangement being such that when said shut-off valve is in its closed position, said pin member is moved into the paint delivery path, and then retracted.

2. A paint dispenser according to claim 1, characterized in that the tubular part of the dispensing head comprises a sleeve detachably secured in said head and forming part of said paint delivery path.

3. A paint dispenser according to claim 2, characterized in that the paint delivery path connects to the tubular part of said dispensing head at a point spaced above its outlet opening at the level of the upper end of said sleeve.

4. A paint dispenser according to any one of the preceding claims, characterized in that said paint supply path includes a conduit which via a valve is connected to said paint delivery path, which further includes a pump interposed between said valve and said shut-off valve, and to which a return conduit is connected at a point intermediate said pump and said shut-off valve, the other end of which return conduit terminates in said supply container at a point remote from the outlet thereof, said return conduit including a restriction means.

5. A paint dispenser according to claim 4, characterized by said delivery path including a filter interposed between the position of connection of said return conduit and said valve.

### Patentansprüche

1. Farbausgabegerät, versehen mit einer Vorratsbehälter, der an einen Farbzuführweg und einen Farbabführweg mit Ausgabekopf (3) angeschossen ist, wobei der Farbabführweg durch eine Absperrvorrichtung steuerbar ist und der Ausgabekopf einen rohrförmigen Teil (10) mit einer Auslassöffnung aufweist und einen Stift (16), der im rohrförmigen Teil angeordnet ist, um in Längsrichtung des rohrförmigen Teiles eine gesteuerte Bewegung in und aus dem Farbabführweg auszulösen, dadurch gekennzeichnet, dass die Absperrvorrichtung ein Absperrventil (4) ist und der Stift (16) zwischen einer Lage, in der der Farbabführweg im Abstand von der Auslassöffnung teilweise abgesperrt ist, und der völlig geöffneten Lage, in der dieser Stift sich ausserhalb des Farbabführweges (2) befindet, beweglich ist, wobei die Einrichtung so ausgebildet ist, dass, wenn das Absperrventil sich in der Schiesslage befindet, der Stift in den Farbabführweg gebracht und dann zurückgezogen wird.

2. Farbausgabegerät nach Anspruch 1, dadurch gekennzeichnet, dass der rohrförmige Teil des Ausgabekopfes mit einer lösbar in diesem Kopf angeordneten Hülse versehen ist, die einen Teil des Farbabführweges bildet.

3. Farbausgabegerät nach Anspruch 2, dadurch gekennzeichnet, dass der Farbabführweg an den rohrförmigen Teil des Ausgabekopfes an einer Stelle angeschlossen ist, die sich in einem Abstand oderhalb dessen Auslassöffnung auf der Höhe des oberen Endes der Hülse befindet.

4. Farbausgabegerät nach einem der vorhergehenden Ansprüche, dadurch gekennzeichnet, dass der Farbzuführweg eine Leitung aufweist, die über ein Dreiwegventil an den Farbabführweg angeschlossen ist, der weiter mit einer zwischen dem Dreiwegventil und dem Absperrventil angeordneten Pumpe versehen ist, und an den eine Rückleitung an einer Stelle zwischen der Pumpe und dem Absperrventil angeschlossen ist, wobei das andere Ende dieser Rückleitung in den Vorratsbehälter an einer von dessen Auslass entfernten Stelle endet, welche Rückleitung ein Begrenzungsmittel enthält.

5. Farbausgabegerät nach Anspruch 4, dadurch gekennzeichnet, dass der Abführweg ein Filter aufweist, das zwischen der Anschlussstelle der Rückleitung und dem Dreiwegventile angeordnet ist.

### Revendications

1. Un distributeur de peinture comprenant un récipient d'alimentation connecté dans une piste d'alimentation en peinture et une piste de distribution de peinture comprenant une tête de distribution (3), ladite piste de distribution de peinture étant contrôlable à l'aide d'un dispositif de fermeture, et ladite tête de distribution comprenant une partie tubulaire (10) ayant un orifice de sortie et un organe de cheville (16) montés dans ladite partie tubulaire pour mouvement contrôlé dans la direction longitudinale de la partie tubulaire dans et au dehors de la piste de distribution de peinture, caractérisé en ce que ledit dispositif de fermeture est une soupape de fermeture (4), et ledit organe de cheville (16) est mobile entre une position partiellement fermant ladite piste de distribution de peinture en rapport espacé avec ledit orifice de sortie et la position entièrement ouverte au dehors de ladite piste de distribution de peinture (2), de telle façon que lorsque ladite soupape de fermeture est dans sa position fermée, ledit organe de cheville est mis en mouvement dans la piste de distribution de peinture et en suite rétracté.

2. Un distributeur de peinture selon la revendication 1, caractérisé en ce que la partie tubulaire de la tête de distribution comprend un manchon fixé de façon amovible dans ladite tête et faisant partie de ladite piste de distribution de peinture.

3. Un distributeur de peinture selon la revendication 2, caractérisé en ce que la piste de distribution de peinture est connectée à la partie tubulaire de ladite tête de distribution à un point espacé au-dessus de son orifice de sortie au niveau de l'extrémité supérieure dudit manchon.

4. Un distributeur de peinture selon l'une quelconque des revendications précédentes, caractérisé en ce que ladite piste d'alimentation en peinture comprend un conduit connecté à l'aide d'une soupape à ladite piste de distribution de peinture, comprenant en plus une pompe interposée entre ladite soupape et ladite soupape de fermeture, et à laquelle est connecté un conduit de retour à un point intermédiaire entre ladite pompe et ladite soupape de fermeture, l'autre extrémité dudit conduit de retour se terminant audit récipient d'alimentation à un point éloigné de sa sortie, ledit conduit de retour comprenant un organe de restriction.

5. Un distributeur de peinture selon la revendication 4, caractérisé en ce que ladite piste de distribution comprend un filtre interposé entre le point de connexion dudit conduit de retour et ladite soupape.

FIG.1

FIG.2